# EUROPEAN PATENT APPLICATION

(11) **EP 4 477 954 A1**
(43) Date of publication of application: **18.12.2024**
(21) Application number: 24181938.2
(22) Date of filing: 13.06.2024
(51) Int. Cl.: F24C 3/02, F24C 3/08, A47J 37/06

(54) **OPEN-FLAME OVEN**

(30) Priority: 13.06.2023 GB 202308784
(71) Applicant: Gozney Group Limited, Bournemouth Dorset BH2 5LP (GB)
(72) Inventor: GOZNEY, Thomas Robert Llewelyn, Lymington, SO41 6DH (GB); WELTON, Patrick, Lymington, SO41 9DX (GB)
(74) Representative: Haseltine Lake Kempner LLP

(57) **Abstract**

Disclosed is an open-flame oven. The open flame oven comprises an oven housing surrounding an oven chamber for containing foodstuffs during cooking. The oven housing comprises an inner surface forming an internal wall of the oven chamber. The open-flame oven further comprises an oven mouth for accessing the oven chamber and a substantially continuous oven floor forming a base of the oven chamber for supporting foodstuffs, the oven floor extending across the oven chamber from the oven mouth. The internal wall of the oven housing comprises lateral wall sections extending generally upwardly along lateral sides of the oven floor. At least a portion of one of the lateral wall sections is recessed laterally from the respective lateral side of the oven floor, thereby forming an alcove in the internal wall of the oven housing adjacent the lateral side of the oven floor. The open-flame oven further comprises a gas burner arranged in the alcove adjacent the lateral side of the oven floor.

## Description

The present disclosure relates to open-flame ovens and is particularly, although not exclusively, concerned with a domestic open-flame gas oven for pizza.

### Background

Open-flame gas ovens for cooking foodstuffs are known. In the field of pizza ovens, and particularly portable and domestic pizza ovens, it is desirable to provide improved portability and/or reduced oven size while maintaining high-temperature cooking performance. Portability and reduced size can limit the available cooking space in the oven, thereby limiting the utility of the oven for cooking larger foodstuffs.

It will be understood that further developments in the field of open-flame ovens would be desirable.

### Summary of invention

According to a first aspect of the present disclosure, there is provided an open-flame oven. The open flame oven may comprise an oven housing surrounding an oven chamber for containing foodstuffs during cooking. The oven housing may comprise an inner surface forming an internal wall of the oven chamber. The open-flame oven may further comprise an oven mouth for accessing the oven chamber and a substantially continuous oven floor forming a base of the oven chamber for supporting foodstuffs, the oven floor extending across the oven chamber from the oven mouth. The internal wall of the oven housing may comprise lateral wall sections extending generally upwardly along lateral sides of the oven floor. At least a portion of one of the lateral wall sections may be recessed laterally from the respective lateral side of the oven floor, thereby forming an alcove in the internal wall of the oven housing adjacent the lateral side of the oven floor. The open-flame oven may further comprise a gas burner arranged in the alcove adjacent the lateral side of the oven floor.

The open-flame oven may further comprise a flame guard extending upwardly between the gas burner and the lateral side of the oven floor.

A height of the flame guard above the oven floor may be adjustable. Additionally or alternatively, a plurality of interchangeable flame guards of different heights and/or thicknesses may be provided.

The flame guard may comprise one or more apertures formed therethrough. The one or more apertures may provide improved airflow to the gas burner. The flame guard may be arcuate in plan view, or comprise distal portions angled away from the lateral side of the oven floor.

The lateral sides of the oven floor may be substantially linear.

A wall thickness of the oven housing may be commensurately thinner proximate the alcove. The outer surface of the oven housing may be undisturbed by the alcove. Such that the outer surface of the oven housing is smooth. This may provide a smooth surface to the exterior of the oven without any protuberances, thereby providing an oven with a smaller form.

The alcove and gas burner may be situated adjacent a left lateral side of the oven floor, with respect to the oven mouth. This may provide good access to the oven, improved visibility of cooking, and a reduced risk of injury such as burns, as the majority of oven users are right handed.

There may be only a single gas burner provided. There may be no gas burner provided along the rear edge of the oven floor. An alcove and gas burner may be provided on only one lateral side of the oven floor. The alcove and gas burner may only be provided on the left lateral side of the oven floor.

A width of the oven mouth may be substantially the same as a maximum width of the oven floor. The width of the oven floor and the lateral span between the lateral sides of the internal wall at the oven mouth may be the same as the oven mouth width.

A rear edge of the oven floor opposite the oven mouth may be arcuate. The rear edge may form a part-circular arc or a semi-circular arc.

The alcove may be formed over only a portion of the lateral side of the oven floor. The alcove may be formed over less than half of the length of the oven floor (i.e., the length from the oven mouth to the rear edge of the oven floor).

The alcove may be elongate along the lateral side of the oven floor. The alcove may extend along the lateral side of the oven floor by a greater distance than its depth (i.e., its lateral depth from the oven floor).

The gas burner may be elongate, in particular the head of the gas burner may be elongate. The head of the gas burner may have one dimension substantially larger than the perpendicular dimension. A venturi of the gas burner may be arranged substantially perpendicular to the major axis of the gas burner head, in particular in plan view. The head of the gas burner head may be fan-shaped. Gas burner head may be angled inwardly towards the oven chamber.

The gas burner, or the gas burner head, may be arranged above the level of the oven floor.

A depth of the alcove (i.e., the lateral recess of the lateral wall section from the oven floor) may decrease with elevation off the oven floor. A length of the alcove (i.e., the length of the alcove along the lateral side of the oven floor) may decrease with elevation off the oven floor. The cross sectional size of the alcove may decrease with increasing elevation off the oven floor (i.e., the alcove becomes smaller at a greater height up the oven).

The oven floor may be formed from ceramic or stone. The oven floor may not be perforated or slatted. The oven floor may be substantially impermeable. The oven floor may be formed of one contiguous plate, or may be formed from multiple plates which abut each other to form a substantially continuous surface.

The internal wall of the oven is generally dome-shaped. In particular, the internal wall may be dome-shaped when viewed in front cross-section across the oven width.

A forepart of the oven housing may extend forwardly above the oven mouth to thereby form an antechamber to the oven chamber. An oven flue may be formed in the forepart of the oven housing above the antechamber. No flue or aperture may be formed in the internal wall of the oven housing other than the oven mouth.

An open-flame oven according to the aspect described above may provide one or more advantages, as follows.

The oven may be particularly compact while providing improved oven floor space, for example because the gas burner does not encroach on the oven floor. The oven may provide improved visibility of the cooking process, greater manoeuvrability of cooking foodstuffs, and/or greater user control over the cooking process. The oven may provide more even heating throughout the oven chamber and/or reduce hot and cool spots within the oven chamber. The oven may provide tailored cooking conditions for certain foodstuffs, such as different pizza styles, thereby reducing the need to reposition foodstuffs during cooking. The oven may be particularly suited to cooking foodstuffs with large surface areas and/or circular shapes, such as pizza. The oven may provide improved gas burner performance and/or efficiency, for example by providing improved secondary airflow to the gas burner. The oven may minimise radiated heat transmitted directly from the burner to the foodstuffs, thereby reducing a risk of local burning of foodstuffs located close to the burner.

To avoid unnecessary duplication of effort and repetition of text in the specification, certain features are described in relation to only one or several aspects of the invention. However, it is to be understood that, where it is technically possible, features described in relation to any aspect of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a perspective view of an exemplary oven according to the principles of this disclosure;
Figure 2 is front view of the oven of Figure 1;
Figure 3 is a side view of the oven of Figures 1 and 2; and
Figure 4 is a sectional plan view of the oven of Figures 1-3, shown along the plane A-A shown in Figures 2 and 3;
Figure 4A is a detailed view of the alcove and gas burner shown in Figure 4;
Figure 5 is a sectional front view of the oven of Figures 1-4 shown along the plane B-B shown in Figure 3; and
Figure 6 is a sectional side view of the oven of Figures 1-5 shown along the plane C-C shown in Figure 2.

### Detailed Description

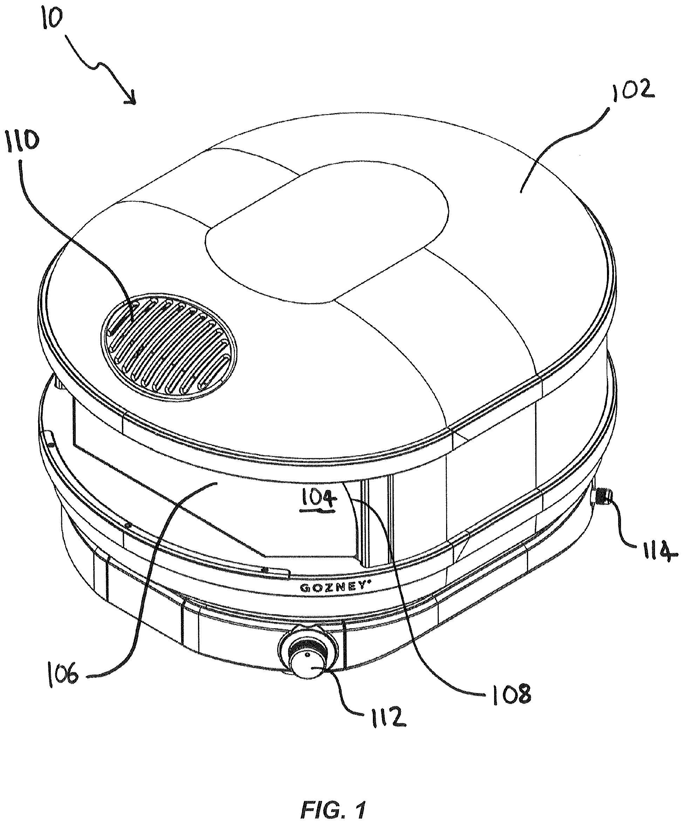

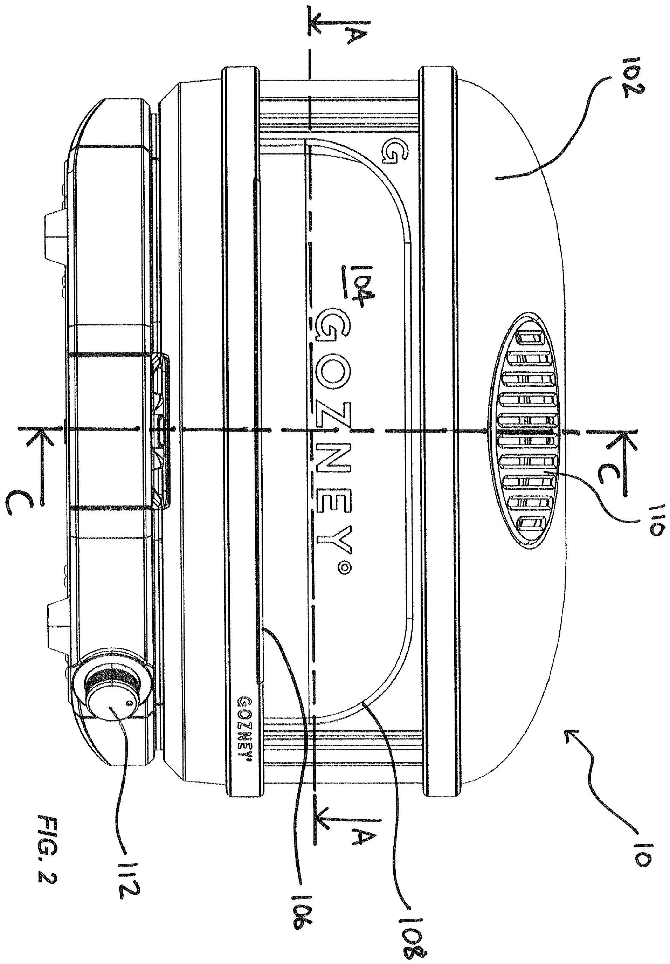

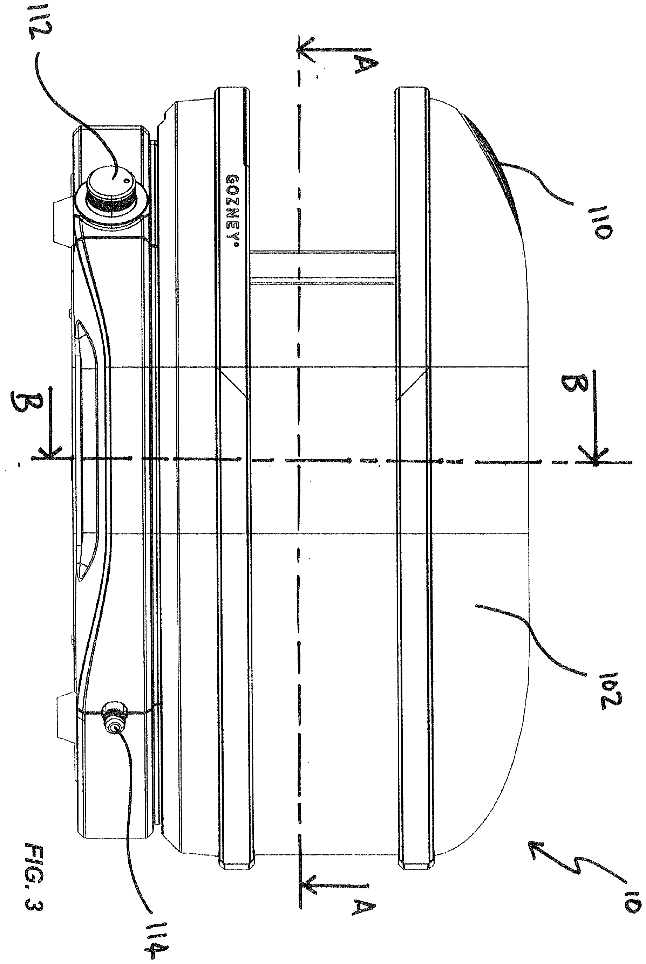

**Figure 1** shows a perspective view of an open-flame oven 10 in accordance with the present disclosure. **Figures 2** **and** **3** show a front view and side view of the open-flame oven 10 respectively. For brevity, the open-flame oven 10 will be referred to in the following detailed description as simply the "oven 10".

The oven 10 comprises an oven housing 102 which surrounds an oven chamber 104 for containing foodstuffs during cooking (not shown). The base of the oven chamber 104 is formed by an oven floor 106, which is substantially continuous and provides a support surface for foodstuffs.

The oven 10 further comprises an oven mouth 108, which is in the form of a large opening at the front of the oven housing 102 and which provides access to the oven chamber 104 to enable the placing of foodstuffs inside the oven chamber 104 for cooking. In use, the oven chamber 104 is heated in order to cook foodstuffs placed within by a gas burner, which will be described further below. The oven floor 106 extends generally rearwardly within the oven housing 102 from the oven mouth, thereby forming the base of the oven chamber 104. The oven 10 is particularly suited to high-temperature cooking applications, such as pizza cooking, and may be capable of reaching temperatures up to around 500 degrees Celsius.

The oven floor 106 which forms the base of the oven chamber 104. The oven floor 106 is configured to be arranged in a substantially horizontal plane in use, so as to provide a support surface for supporting foodstuffs to be cooked or cured in the oven chamber 104. The oven floor 106 is a stone floor in this example. Ovens of this type typically have this a thick heat-retaining floor which absorbs heat from the energy source of the oven such that the underside of foodstuffs (such as pizza) can be heated efficiently. In other examples, the oven floor may be formed from other materials. The floor may be formed from, for example, stone, ceramic, or plate metal.

In this case, the oven floor 106 is formed from a single floor panel. In other examples, a plurality of separate panels may be provided which abut to form a substantially continuous surface. The continuous surface may be formed from more than one floor panel, but there may be essentially no gaps between separate panels of the oven floor. The oven floor 106 is substantially impermeable.

The oven 10 further comprises a flue 110 for exhausting gases, such as hot air and smoke, from the oven chamber 104. In this example, the flue is a slotted opening, but in other examples it may take the form of a chimney flue or other type of flue.

The oven 10 additionally comprises a burner adjuster 112, which allows the intensity of the flame (and thus the temperature of the oven chamber 104) to be adjusted, for example by adjusting the gas flow to the gas burner of the oven. In addition, a gas inlet port 114 is provided to connect the oven 10 to a source of gas, such as a gas cylinder or gas mains supply (not shown).

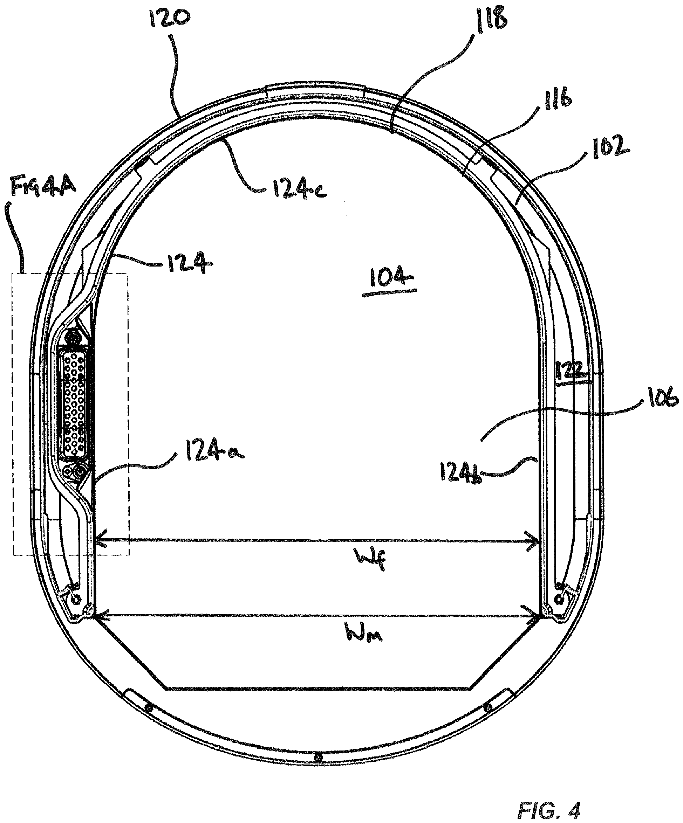

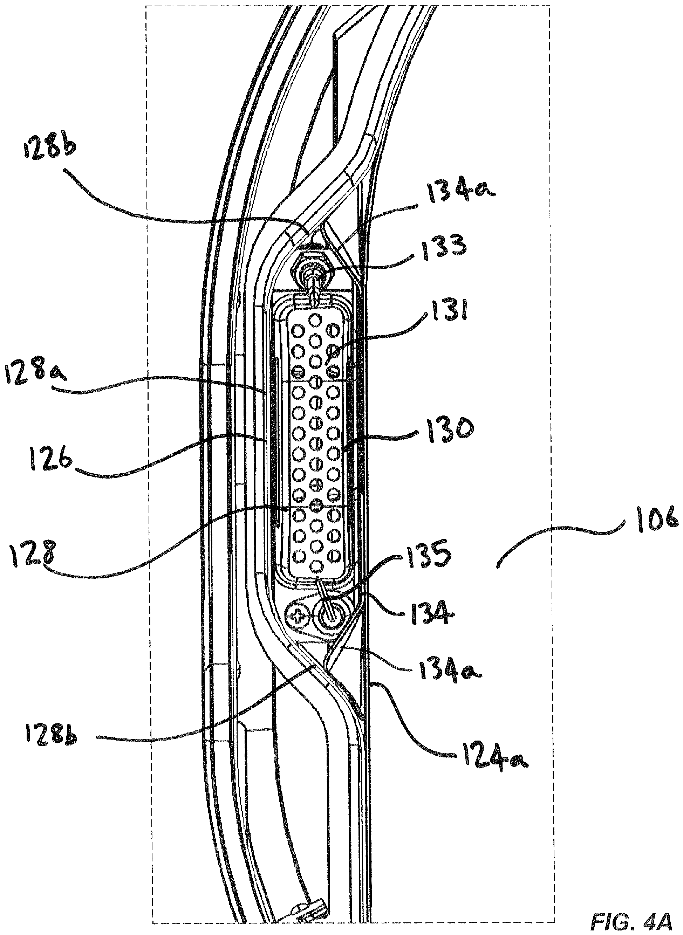

Referring now to **Figures 4** **and** **4A****,** a sectional plan view of the oven 10 is shown, viewed on the plane A-A indicated in Figures 2 and 3.

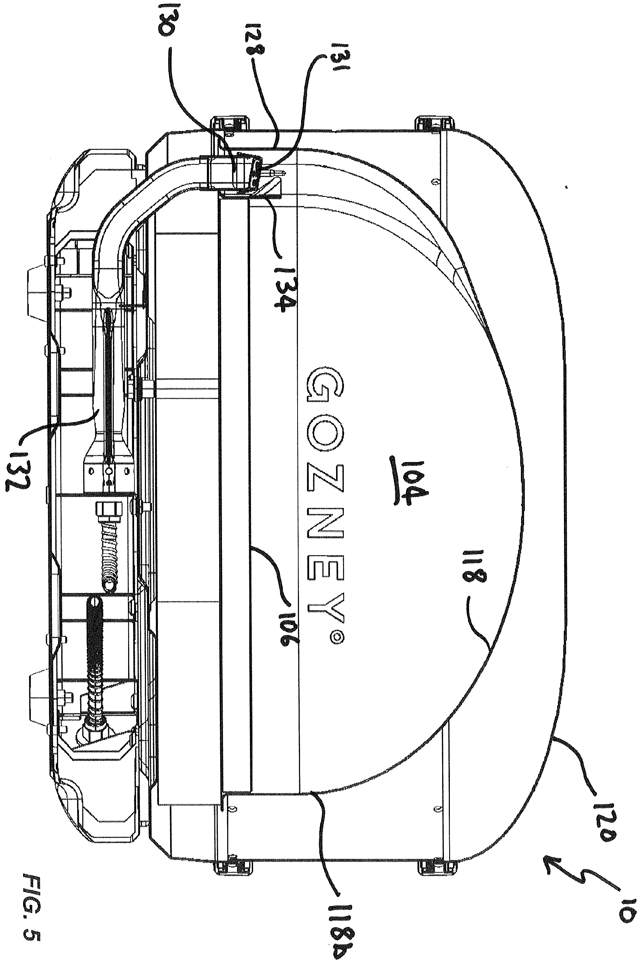

As can be appreciated from Figure 4, the oven housing 102 is generally in the form of a dome-shaped housing which surrounds the oven chamber 104. The oven housing 102 comprises an inner surface 116 which forms an internal wall 118 of the oven chamber 104. In other words, the internal wall 118 defines the oven chamber 104. The internal wall 118 extends around three peripheral sides (left, right, and rear) of the oven floor 106, with the front of the oven housing comprising the oven mouth 108, providing access to the oven chamber 104. The internal wall 118 also extends over the oven chamber 104 in a dome-like manner, to substantially enclose the oven chamber 104. In particular, the internal wall 118 may be dome-shaped when viewed in front cross-section across the oven width, for example as shown in Figure 5. Where left, right, front, and rear are discussed in this disclosure, it should be understood that these directions are with respect to the oven mouth 108.

The internal wall 118 of the oven 10 is, in this example, formed of a continuous piece of material, such as sheet metal, which may provide simpler manufacture, fewer failure points, and prevent heat escaping the oven chamber, thereby improving heat retention and efficiency.

The oven housing 102 further comprises an external wall 120, which is exposed to the external environment. Between the internal wall 118 and the external wall 120, a void 122 is formed. The void 122 may be filled with insulating material to reduce heat losses from the oven chamber 104 to the external environment.

As will be appreciated with reference to Figure 4, the width Wₘ of the oven mouth 108 is configured to be substantially the same as the maximum width W_{f} of the oven floor 106. This may provide improved access to the entire surface area of the oven floor 106.

At the periphery 124 of the oven floor 106, the oven floor 106 meets the internal wall 118 of the oven housing 102. The periphery of the oven floor 106 comprises three sections, a left lateral side 124a, a right lateral side 124b, and a rear side 124c.

In this example, the left and right lateral sides 124a and 124b of the oven floor 106 are substantially linear and extend rearwardly from the oven mouth 108 in a substantially perpendicular direction to the span of the oven mouth 108.

The rear side 124c of the oven floor 106 extends arcuately, in this example in a semicircle, between the left and right lateral sides 124a and 124b. This gives the rear of the oven floor 106 a semi-circular shape, which may be particularly beneficial when cooking foods which are circular in shape, such as pizza, as the food can more closely conform to the oven floor shape, thereby avoiding large areas of unused oven floor space, which may be present in, for example, the corners of a rectangular oven floor. This may in turn reduce the available surface area for heat losses and provide a particularly compact, efficient, and light oven.

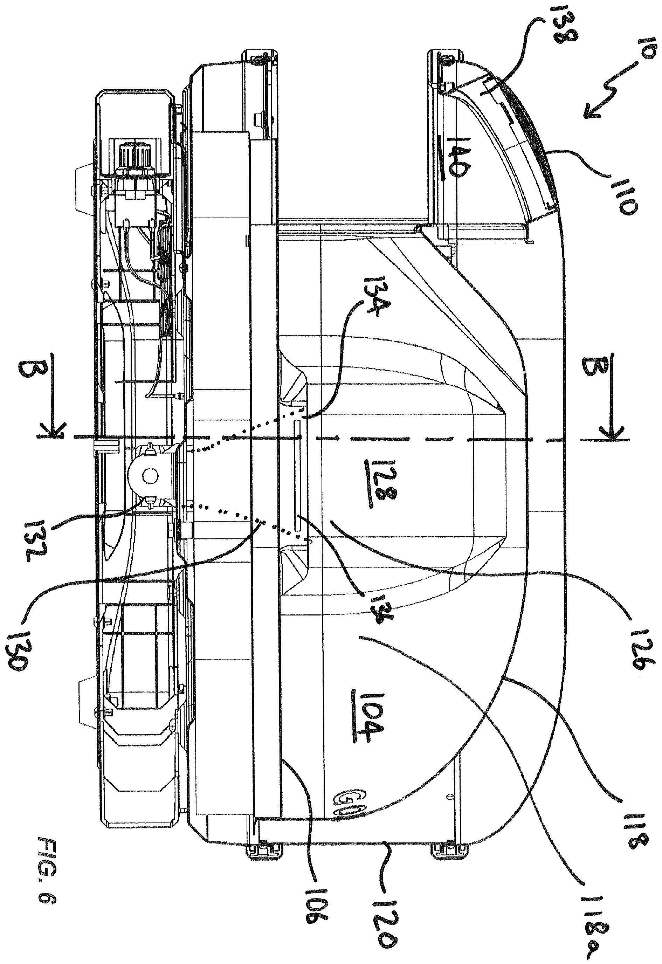

With additional reference to **Figure 5** **and** **Figure 6****,** it can be observed that the internal wall 118 comprises left and right lateral wall sections (118a and 118b respectively) which correspond to, and extend generally upwardly adjacent, the lateral sides 124a and 124b of the oven floor 106. The lateral wall sections 118a and 118b curve inwardly with increasing elevation from the oven floor 106 and meet at the top of the oven chamber 104 to thereby form a dome-shaped roof of the oven chamber 104.

With additional reference to Figure 4A, a portion 126 of the left lateral wall section 118a is recessed laterally from the left lateral side 124a of the oven floor, thereby forming an alcove 128 in the internal wall 118 adjacent the lateral side 124a of the oven floor 106. In this example, the alcove 128 is formed on the left side of the oven floor 106, but it will be appreciated that an alcove could alternatively or additionally be formed at the right side of the oven floor, in the right lateral wall section 118b in substantially the same manner.

As can be appreciated from Figure 4A, the wall thickness of the oven housing, i.e. the spacing between the internal wall 118 and the external wall 120, is reduced in the region of the alcove 128. The wall thickness may be commensurately thinner with respect to the depth of the alcove, for example such that the external wall 120 is substantially undisturbed by the presence of the alcove 128. Additional or alternative heat shielding or insulation may provided in the void 122 proximate the alcove 128 to prevent or reduce a hot spot on the oven exterior. By reducing the wall thickness in the region of the alcove, the external wall 120 of the oven 10 may maintain a smooth surface without any protuberances, thereby providing an oven with a smaller form.

The alcove 128 is, in this example, formed over only a portion of the left lateral side 118a of the oven floor 106. In particular, the alcove 128 is formed over less than half of the length of the oven floor (i.e., the distance from the oven mouth to the rear of the oven floor 106). The alcove 128 is also elongate along the left lateral side 124a of the oven floor 106; in other words, the alcove 128 extends a greater distance along the side of the oven floor 106 than the depth to which it is recessed laterally into the internal wall 118.

Referring to Figure 6 specifically, it can be observed that, in this example, a lateral depth of the alcove 128 (i.e., the lateral distance to which the alcove 128 is recessed with respect to the side of the oven floor 106) decreases with increasing elevation off the oven floor 106. In this way, the alcove 128 gradually tapers at its upper end into the dome shape of the rest of the internal wall 118. Likewise, a length of the alcove 128 (i.e., the length of the alcove along the lateral side of the oven floor 106) decreases with increasing elevation off the oven floor 106. More generally, the cross sectional size of the alcove 128 decreases with increasing elevation off the oven floor 106 (i.e., the alcove becomes smaller at a greater height up the oven).

The central section 128a of the alcove is substantially parallel to the left lateral side 124a of the oven floor, while the front and rear sections 128b of the alcove 128 are tapered between the central section and the rest of the internal wall 118 so as to provide a smooth transition between the alcove 128 and the internal wall 118.

Referring again to Figures 4 and 4A, a gas burner 130 is provided in the alcove 128. The gas burner 130 is configured to receive gas fuel from a gas fuel source, and combust the gas in order to produce an open flame to heat the oven chamber 104 and the oven floor 106. An igniter 135 is provided to ignite the gas burner 130. A flame failure device 133 is also provided.

In this example, only a single gas burner 130 is provided, on only one lateral side of the oven floor 106. However, in other examples, the alcove 128 and gas burner 130 may be provided on the right side only, on both left and right sides, and even additionally at the rear side of the oven floor.

Providing the gas burner 130 in the alcove 128 provides that the gas burner 130 does not encroach into the oven floor 106, and allows the oven floor 106 to have a smooth lateral edge shape. This may provide an increased cooking area, and may reduce stress concentrations in the oven floor 106, thereby reducing risk of damage or cracks to the oven floor 106. Additionally, providing the gas burner 130 in a laterally recessed alcove 128 may provide improved access to the oven chamber 104, improved visibility of cooking, as the hottest area of the oven chamber 104 is more easily visible. This may further provide user-friendliness, such as easier use, a reduced risk of injury such as burns. Providing the alcove and gas burner on the left side of the oven may be particularly beneficial, as the majority of the population, and thus oven users, are right handed.

In this example, the gas burner 130, and particularly the outlet or head 131 of the gas burner 130, is elongate. In particular, the gas burner outlet 131 has a first dimension substantially larger than the perpendicular dimension. In this example, the major dimension of the gas burner 130 is aligned with the major axis of the alcove 128, and aligned with the lateral side 124a of the oven floor 106. Additionally, in this example, the gas burner 130 is generally fan-shaped, as shown in Figure 6 in dotted lines, and the outlet 131 is angled inwardly towards the oven chamber 104, as shown in Figure 5. This may provide particularly good heat distribution.

With reference to Figure 5, a venturi mixer 132 is provided to mix air with the gas provided to the gas burner 130 for combustion. In this example, the venturi mixer 132 is elongate, and is arranged substantially perpendicular to the major axis of the gas burner 130 (in plan view). This may provide improved combustion and performance.

Referring to Figures 4, 5 and 6, the oven 10 additionally comprises a flame guard 134. The flame guard 134 extends upwardly between the gas burner 130 in the alcove 128 and the lateral side 124a of the oven floor 106. The flame guard is formed from, e.g., steel, and is arranged to guard the local region of the oven floor 106 and oven chamber 104 from the most intense radiated heat from the gas burner 130.

The gas burner 130, and in particular the gas burner outlet 131 is arranged above the level of the oven floor 106. This may maximise the space below the oven floor 106 for other components and/or reduce the total height and size of the oven 10.

The height of the flame guard 134 above the oven floor 106 may be adjustable. Additionally or alternatively, the oven 10 may be provided with a plurality of interchangeable flame guards of different heights and/or thicknesses to suit different use cases. In this example, the flame guard 134 has at least one aperture 136 formed therethrough, which may provide improved airflow to the gas burner. With reference to Figure 4A, the flame guard 134 has distal portions 134a which are angled away from the lateral side 124a of the oven floor 106, such that the flame guard 134 forms a generally curved shape.

Referring to Figure 6, a forepart 138 of the oven housing 102 extends forwardly from above the oven mouth 108 to thereby form an antechamber 140 to the oven chamber 104. The oven flue 110 is formed through in the forepart 138 above the antechamber 140. This configuration provides that gas is expelled from the oven chamber 104 via the oven mouth 108, and can then exit upwardly through the flue 110. This may provide a cooler working environment for the user proximate the oven mouth 108. In this example, no flue or other aperture is formed in the internal wall 118 other than the oven mouth 108 itself.

The features of the oven described above may provide various technical advantages. The oven may be particularly compact while providing improved oven floor space, for example because the gas burner does not encroach on the oven floor. The oven may provide improved visibility of the cooking process, greater manoeuvrability of cooking foodstuffs, and/or greater user control over the cooking process. The oven may provide more even heating throughout the oven chamber and/or reduce hot and cool spots within the oven chamber. The oven may provide tailored cooking conditions for certain foodstuffs, such as different pizza styles, thereby reducing the need to reposition foodstuffs during cooking. The oven may be particularly suited to cooking foodstuffs with large surface areas and/or circular shapes, such as pizza. The oven may provide improved gas burner performance and/or efficiency, for example by providing improved secondary airflow to the gas burner. The oven may minimise radiated heat transmitted directly from the burner to the foodstuffs, thereby reducing a risk of local burning of foodstuffs located close to the burner.

It will be appreciated by a skilled person that although the invention has been described by way of example, with reference to exemplary examples, it is not limited to the disclosed examples and that alternative examples could be constructed without departing from the scope as defined by the appended claims.

## Claims

1. An open-flame oven comprising:
an oven housing surrounding an oven chamber for containing foodstuffs during cooking, the oven housing comprising an inner surface forming an internal wall of the oven chamber;
an oven mouth for accessing the oven chamber; and
a substantially continuous oven floor forming a base of the oven chamber for supporting foodstuffs, the oven floor extending across the oven chamber from the oven mouth;
wherein the internal wall of the oven housing comprises lateral wall sections extending generally upwardly along lateral sides of the oven floor,
wherein at least a portion of one of the lateral wall sections is recessed laterally from the respective lateral side of the oven floor, thereby forming an alcove in the internal wall of the oven housing adjacent the lateral side of the oven floor, and
wherein the open-flame oven further comprises a gas burner arranged in the alcove adjacent the lateral side of the oven floor.

2. An open-flame oven as claimed in claim 1, further comprising a flame guard extending upwardly between the gas burner and the lateral side of the oven floor.

3. An open-flame oven as claimed in claim 2, wherein a height of the flame guard above the oven floor is adjustable and/or wherein a plurality of interchangeable flame guards of different heights and/or thicknesses are provided.

4. An open-flame oven as claimed in any preceding claim, wherein the lateral sides of the oven floor are substantially linear.

5. An open-flame oven as claimed in any preceding claim, wherein a wall thickness of the oven housing is commensurately thinner proximate the alcove.

6. An open-flame oven as claimed in any preceding claim, wherein the alcove and gas burner are situated adjacent a left-hand lateral side of the oven floor.

7. An open-flame oven as claimed in any preceding claim, wherein a width of the oven mouth is substantially the same as a maximum width of the oven floor.

8. An open-flame oven as claimed in any preceding claim, wherein a rear edge of the oven floor opposite the oven mouth is arcuate.

9. An open-flame oven as claimed in any preceding claim, wherein the alcove is formed over only a portion of the lateral side of the oven floor.

10. An open-flame oven as claimed in any preceding claim, wherein the alcove is elongate along the lateral side of the oven floor.

11. An open-flame oven as claimed in any preceding claim, wherein the gas burner is elongate along the alcove.

12. An open-flame oven as claimed in any preceding claim, wherein:
a) a depth of the alcove decreases with elevation off the oven floor; and /or
b) a length of the alcove decreases with elevation off the oven floor.

13. An open-flame oven as claimed in any preceding claim, wherein the oven floor is formed from ceramic or stone.

14. An open-flame oven as claimed in any preceding claim, wherein the internal wall of the oven is generally dome-shaped.

15. An open-flame oven as claimed in any preceding claim, wherein a forepart of the oven housing extends forwardly above the oven mouth to thereby form an antechamber to the oven chamber, wherein an oven flue is formed in the forepart of the oven housing above the antechamber.
